# EUROPEAN PATENT SPECIFICATION

(11) **EP 4 211 555 B1**
(45) Date of publication and mention of the grant of the patent: **07.05.2025**
(21) Application number: 20772052.5
(22) Date of filing: 14.09.2020
(51) Int. Cl.: G06N 3/045, G06F 9/48, G06N 3/08, G06N 3/04, G06F 9/50

(54) **SCHEDULING FOR FEDERATED LEARNING**
PLANUNG FÜR FÖDERIERTES LERNEN
ORDONNANCEMENT POUR APPRENTISSAGE FÉDÉRÉ

(43) Date of publication of application: 19.07.2023
(73) Proprietor: Telefonaktiebolaget LM Ericsson (publ), 164 83 Stockholm (SE)
(72) Inventor: MORADI, Farnaz, 112 18 Stockholm (SE); LINDERO, David, 977 53 Luleå (SE); LINDSTRÖM, Daniel, 974 38 Luleå (SE); HÁGA, Péter, 1221 Budapest (HU)
(74) Representative: Zacco Sweden AB
(86) International application number: PCT/EP2020/075669
(87) International publication number: WO 2022/053167

(56) References cited:
- US-A1- 2019 220 703
- GILSOO LEE ET AL: "An Online Framework for Ephemeral Edge Computing in the Internet of Things", ARXIV.ORG, CORNELL UNIVERSITY LIBRARY, 201 OLIN LIBRARY CORNELL UNIVERSITY ITHACA, NY 14853, 18 April 2020 (2020-04-18), XP081647804

## Description

### Technical field

The present disclosure relates to the field of scheduling for federated learning for training a federated learning model. In particular, the present disclosure relates to methods and systems for scheduling federated learning tasks to be performed by a number of base stations and mobile communication devices (e.g. connected autonomous vehicles).

### Background

In vanilla federated learning (FL), participating devices (i.e. workers) which are typically assumed to be connected to an unmetered network and connected to power, train a local machine learning (ML) model using local data and only share model parameters with a centralised server (i.e. master) running a datacentre. The master aggregates the model parameters in order to generate a global ML model (e.g. using federated averaging method). This process continues in multiple rounds until the model is converged and can be deployed for inference at the workers.

Some background information can be found in Kai Yang, Tao Jiang, Yuanming Shi, and Zhi Ding, "Federated Learning via Over-the-Air Computation" (2019), Howard H. Yang, Zuozhu Liu, Tony Q. S. Quek, H. Vincent Poor, "Scheduling Policies for Federated Learning in Wireless Networks" (2019), and S. R. Pokhrel and J. Choi, "Federated Learning with Blockchain for Autonomous Vehicles: Analysis and Design Challenges," in IEEE Transactions on Communications, DOI: 10.1109/TCOMM.2020.2990686.

US 2019/220703 A1 relates to load balancing in the context of distributed machine learning where computational resources of multiple edge compute nodes are utilized (e.g., for collaborative learning for an underlying ML model).

### Summary

The invention is set out in the appended set of claims.

ML and Artificial Intelligence (AI) techniques such as computer vision for object detectior and prediction of actions of actors in the environment have been proposed to improve the performance of mobile communication devices, such as connected and autonomous vehicles. Each mobile communication device which owns its own data can still benefit from data available at other devices by using federated learning while preserving privacy. Using a centralised server at a data centre as the master may cause extra delays in training and convergence of FL models. Additionally, a centralised server may not be available during training to the mobile communication devices. Therefore, the devices should either send their model parameters to the edge (e.g. to an access point or base station on the road) or communicate directly with each other.

However, when training a model for mobile communication devices (e.g. Internet of Things (IoT) devices) that are connected to a cellular network, new challenges may arise. Training FL models requires low latency and high throughput connection, where a large number of mobile communication devices should send and receive their model parameters through a resource-constrained spectrum via unreliable channels. In these cases, the limited communication bandwidth becomes the main bottleneck for aggregating the locally computed updates. In addition, only a portion of devices can be scheduled for updates at each round of FL. Moreover, due to the shared nature of the wireless medium, transmissions are subjected to interference and are not guaranteed. These limitations can negatively impact the performance and the coverage of FL. Therefore, scheduling of transmission and reception of ML model parameters is desired. One aspect of the present disclosure provides a computer-implemented method for scheduling federated learning tasks for training a federated learning model. The method comprises acquiring data associated with the routes of a plurality of mobile communication devices, determining a subset of mobile communication devices which share a same route for a given amount of time based on the data associated with the routes of the plurality of mobile communication devices, and determining one or more base stations located along the shared route. The method further comprises estimating, for the one or more base stations, points of time at which the subset of mobile communication devices is in a coverage area of respective base stations. The method further comprises determining at least one of: an amount of required processing resources at the base stations and an amount of required processing resources at the subset of mobile communication devices, wherein the determination is based on the estimated points of time at which the subset of mobile communication devices are in coverage areas of respective base stations. The method further comprises generating a schedule for a plurality of federated learning tasks to be performed at the subset of mobile communication devices and the one or more base stations, wherein the generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices.

Another aspect of the present disclosure provides a system for scheduling federated learning tasks for training a federated learning model. The system comprises a processing circuit, and a memory coupled to the processing circuit and comprising computer readable program instructions that, when executed by the processing circuit, cause the system to perform operations as described herein.

Another aspect of the present disclosure provides a system for scheduling federated learning tasks for training a federated learning model. The system is configured to: acquire data associated with the routes of a plurality of mobile communication devices, determine a subset of mobile communication devices which share a same route for a given amount of time based on the data associated with the routes of the plurality of mobile communication devices, and determine one or more base stations located along the shared route. The system is also configured to estimate, for the one or more base stations, points of time at which the subset of mobile communication devices are in coverage areas of respective base stations. The system is also configured to determine at least one of: an amount of required processing resources at the base stations and an amount of required processing resources at the subset of mobile communication devices, wherein the determination is based on the estimated points of time at which the subset of mobile communication devices are in coverage areas of respective base stations. The system is further configured to generate a schedule for a plurality of federated learning tasks to be performed at the subset of mobile communication devices and the one or more base stations, wherein the generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices.

### Brief description of the drawings

For a better understanding of examples of the present disclosure, and to show more clearly how the examples may be carried into effect, reference will now be made, by way of example only, to the following drawings in which:
Figures 1 is a flowchart illustrating a computer-implemented method for scheduling federated learning tasks for training a federated learning model, according to embodiments of the disclosure;
Figure 2 is a block diagram of a system for scheduling federated learning tasks for training a federated learning model, according to embodiments of the disclosure;
Figure 3 is a schematic diagram of illustrating an exemplary implementation of the method for scheduling federated learning tasks for training a federated learning model, according to an embodiment; and
Figure 4A and Figure 4B are sequence diagrams illustrating an exemplary implementation of the method for scheduling federated learning tasks for training a federated learning model, according to an embodiment.

### Detailed description

Federated learning (FL) in its original form is suited for decentralised privacy preserving model training. However, frequency updates from components providing differentiated model contradicts with the requirement to minimise communication of vehicles. For both the transmission of the data necessary to update the model (upwards from the vehicle to the cloud) and the transmission of the updated model (downwards from the cloud to the vehicle, large data volumes are required over the resource-constrained spectrum, depending on the size of the model and the number of FL rounds before convergence. This significantly affects the applicability of federated learning for vehicles.

One solution to the above problem is to use scheduling. Howard H. Yang, Zuozhu Liu, Tony Q. S. Quek, H. Vincent Poor, "Scheduling Policies for Federated Learning in Wireless Networks", https://arxiv.org/abs/1908.06287, 2019, discusses different scheduling policies for reducing inter-cell interference for FL model convergence. However, this solution does not address the problem scheduling for moving devices across multiple cells.

Embodiments described herein relates to methods and systems for providing optimised scheduling of tasks to be performed by workers or semi-workers (which may be referred to as "semi-masters" below) in a federated learning environment. The resulting schedule enables federated learning to be conducted by mobile communication devices such as loT devices in motion (e.g. connected vehicles or autonomous vehicles). The proposed system collects relevant data from the devices and from the surrounding cellular components, and the proposed method is responsible for planning and scheduling computation and communication over a cellular network. According to at least some of the embodiments described herein, the disclosed technique provides the advantages associated with having the knowledge of the priority of the FL tasks to be performed, the connectivity, the inferred or known routes of the devices, and other metrics. Based on the collected data, the proposed technique can determine the optimal schedule so as to ensure that the common FL task is converging to produce the best result. In particular, the proposed technique according to at least some of the embodiments described herein eliminates the need for communication with a single centralised server (i.e. a master) and accordingly delays in training can be reduced. Thus, federated training can be performed for more rounds which leads to better performance of the trained federated learning models.

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

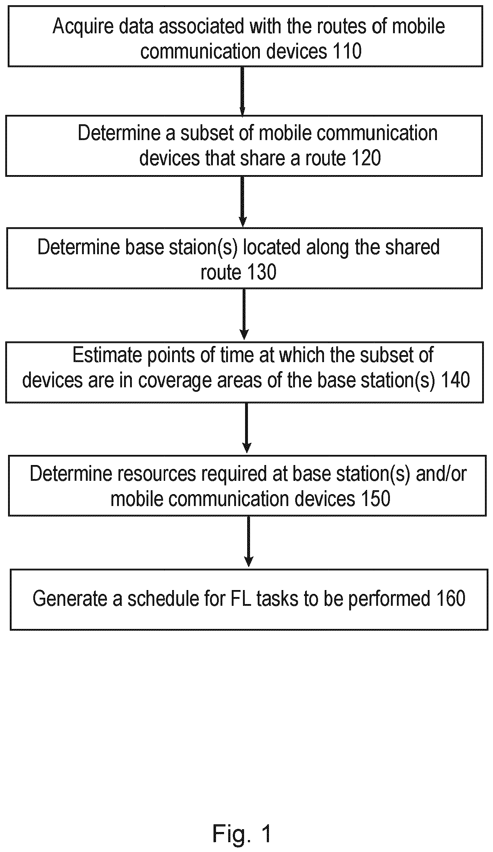

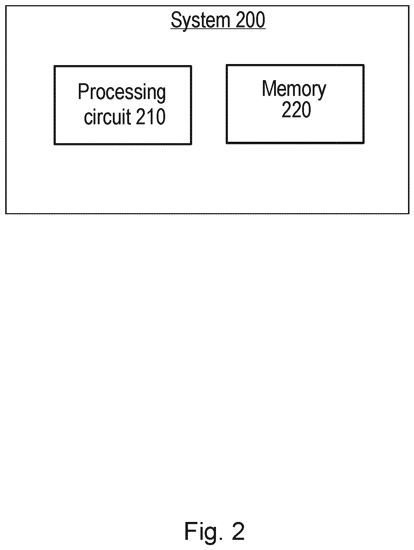

**Figure 1** is a flowchart illustrating a computer-implemented method for scheduling federated learning tasks for training a federated learning model, according to embodiments of the disclosure. The illustrated method can generally be performed by or under the control of either or both of an processing unit and a communication unit, such as the processing unit and the communication unit of the system 200 as will be described below with reference to Figure 2.

With reference to Figure 1, at step 110, data associated with the routes of a plurality of mobile communication devices (e.g. loT devices) is acquired. Such data may be acquired from a storage and/or memory of respective mobile communication devices themselves or acquired from a remote entity (which in turn may be connected to the respective mobile communication devices). One or more of the mobile communication devices may be vehicles, in particular vehicles connected to a network, for example. In some other examples, one or more of the mobile communication devices may be devices (e.g. a smartphone) belonging to a passenger on a vehicle (e.g. a bus or a train).

The data associated with the routes of the plurality of mobile communication devices may include at least one of: current route data of the plurality of mobile communication devices, and inferred route data of the plurality of mobile communication devices. Furthermore, the current route data of the plurality of mobile communication devices may be acquired from a navigation application (e.g. the satnav system of a car) associated with respective mobile communication devices. Also, the inferred route data may be acquired from an external artificial intelligence component. For example, a route can be inferred from historical travel data (e.g. from their commute) for a relevant user of the mobile communication device. Such inference from historical travel data can be performed by applying a suitable machine learning model to the historical travel data.

In more specific detail, in some embodiments data associated with the routes of the plurality of mobile communication devices may comprise at least one of: a location of a mobile communication device, a speed of a mobile communication device, a direction of a mobile communication device, and one or more environmental features associated with a mobile communication device. The one or more environmental features may include one or more of: road conditions, traffic conditions, weather conditions.

Subsequently, at step 120, a subset of mobile communication devices which share a same route for a given amount of time is determined based on the data associated with the routes of the plurality of mobile communication devices acquired at step 110. The given amount of time in the context of the present disclosure may be determined based on at least one of: complexity of the federated learning model, the speed of the mobile communication devices, the direction of the mobile communication devices, the locations of the mobile communication devices relative to base stations in their respective routes, and processing resources available at the mobile communication devices.

At step 130, one or more base stations located along the route shared by the subset of mobile communication devices are determined. In the context of the present disclosure, "located along the route" may refer to scenarios in which at least part of the coverage area of the base station overlaps with the shared route such that a relevant mobile communication device would enter the coverage area on its route. The base stations described herein with reference to Figure 1 are understood assume master roles in the context of federated learning.

In some embodiments, the method may further comprise acquiring configuration management data associated with the shared route, for example form an operations support system (OSS). In these embodiments, at step 130, the determination of the one or more base stations located along the shared route may be based on the configuration management data.

Then, at step 140, for the one or more base stations determined at step 130, points of time at which the subset of mobile communication devices are in coverage areas of the respective base stations are estimated.

As mentioned above, in some embodiments data associated with the routes of the plurality of mobile communication devices acquired at step 110 may comprise at least one of: a location of a mobile communication device, a speed of a mobile communication device, a direction of a mobile communication device, and one or more environmental features associated with a mobile communication device. In these embodiments, the estimation of points of time at which the subset of mobile communication devices is in the coverage area of the respective base station may comprise analysing, using a machine learning model (e.g. a model for prediction positions and/or routes, such as ones proposed in Abdalla et al "DeepMotions: A Deep Learning System For Path Prediction Using Similar Motions", January 2020, IEEE Access PP(99):1-1, DOI: 10.1109/ACCESS.2020.2966982, and Sudhanva et al "Personalized dynamic route prediction using machine learning: A review", DOI: 10.1109/ICECA.2017.8203694), the data associated with the routes of the plurality of mobile communication devices acquired in step 110.

At step 150, at least one of an amount of required processing resources at the base stations and an amount of required processing resources at the subset of mobile communication device is determined. The amount of required processing resources for a base station or for a mobile communication device may be associated with at least one of: an amount of required computation resources, an amount of required storage resources, and an amount of required networking resources.

The determination at step 150 is based on the estimated points of time at which the subset of mobile communication device is in coverage areas of respective base stations. In some embodiments, this determination may be further based on an estimated amount of processing resources required by the federated learning model.

Subsequently, at step 160, a schedule for a plurality of federated learning tasks to be performed at the subset of mobile communication devices and the one or more base stations is generated. Examples of federated learning tasks include transmission/reception of model parameters between base stations and mobile communication devices and/or between mobile communication devices (e.g. transmission of initial model parameters to mobile communication devices, transmission of local model parameters from mobile communication devices subsequent to FL training), as well as actual federated learning model training at the mobile communication devices using data available at respective mobile communication devices. The schedule may include information such as timing, ordering, and role assignments of the one or more base stations and/or mobile communication devices. In some cases, the schedule may be generated such that safety critical applications (e.g. systems predicting traffic problems or warning systems that communicates with the mobile communication devices) are prioritised over model training. Also, in some cases, the schedule may be generated such that federated training is performed at a certain desired number or proportion of vehicle types (e.g. car, trucks, buses, etc.), for example if the mobile communication device is vehicle or the mobile communication device is associated with a user travelling in a vehicle.

The generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices. For example, different mobile communication devices may be assigned with different types of federated learning tasks depending on the time available to perform the federated learning task(s), and/or the processing resources available at the mobile communication device, and/or the data already available for the federated learning model (e.g. if a mobile communication device has more available processing resources, it can be tasked with training more layers in a Deep Neural Network (DNN)).

A priority level associated with a federated learning task may be based on at least one of: a priority level of the federated learning model, a type of data required for the federated learning model, existing data already available for the federated learning model, a level of subscription associated with a mobile communication device at which the federated learning task is to be performed. For example, if the user of the mobile communication device (e.g. a car or a smartphone) has a higher-tier subscription, the processing resources of the respective mobile communication device may be used less (by assigning fewer federated learning tasks to the device). As another example, if the user of the mobile communication device has a higher-tier subscription, updated model parameters may be received faster or more frequently at the respective mobile communication device.

Therefore, in some embodiments, the method may further comprise the determination of such priority levels. The priority level of the federated learning model may be set by a controlling entity and is contained in the metadata of the federated learning model. In some embodiment, the priority levels associated with federated learning tasks may be acquired from the metadata of the federated learning model.

In some embodiments, the generation of the schedule at step 160 may be further based on at least one of: a type of connectivity between respective mobile communication devices and/or between respective base stations and respective mobile communication devices, a quality of connectivity between respective mobile communication devices and/or between respective base stations and respective mobile communication devices, radio quality metrics of the one or more base stations and/or of one or more of the subset of mobile communication devices, a type of device required for performing a respective federated learning task, available processing power at a respective base station, and available processing power at a respective mobile communication devices. In some cases, the available processing power such as the available RAM-memory and/or other closely related capabilities at a base station and/or a mobile communication device can be taken into account in the generation of the schedule. For example, the scheduling may take into account if the federated learning model is too large to fit in the memory of the processing component of a mobile communication device.

In some embodiments, the schedule may be generated such that when a respective mobile communication device is estimated to be in a coverage area of a respective base station, communication between the mobile communication device and the base station is triggered to perform at least a part of a scheduled federated learning task. In these embodiments, the communication between the mobile communication device and the base station comprises at least one of: transmitting initial model parameters for the federated learning model from the base station to the mobile communication device, and transmitting local model parameters for the federated learning model from the mobile communication device to the base station. The local model parameters may be generated by respective mobile communication devices using data acquired from sensor(s) at the mobile communication devices. In some embodiments, the model parameters may include layer coefficients in a Deep Neural Network (DNN) or a Convolutional Neural Network (CNN).

The method may further comprise communicating the generated schedule to at least one of the one or more base stations and the subset of mobile communication devices.

In some embodiments, the method may further comprise assigning a worker role or a semi-master role to at least one of the subset of mobile communication devices. In these embodiments, a worker role may indicate that model training is to be performed at the respective mobile communication device, and a semi-master role may indicate that gathering of local model parameters from nearby mobile communication devices is to be performed at the respective mobile communication device. More specifically, in some embodiments a worker role may indicate that model layers (e.g. layers in a DNN or a CNN) are trained and evaluated at the respective mobile communication device. The assignment of roles may be based on the time available, and/or data available, and/or processing resources available for the training of the federated learning model. Also, the assignment of roles may be regarded as part of the generation of the schedule in some embodiments. A "semi-master" role may also be referred to as a "semi-worker" role in the context of federated learning.

In some embodiments, the method may further comprise receiving, at a base station, local model parameters from at least one of the subset of mobile communication devices, and performing, at the base station, an aggregation algorithm based on the received local model parameters to generate an updated federated learning model. In these embodiments, the method may further comprise transmitting the updated federated learning model to at least one of the subset of mobile communication devices or at least one of the plurality of mobile communication devices.

It will be appreciated that training of the federated learning model (i.e. performing the aggregation algorithm) can be done using online asynchronous methods, i.e. where not all local model parameters would be available for a base station to perform federated averaging, for example when some of the mobile communication devices drop out of the shared route (e.g. unexpected change of route) or are slower in local training due to various reasons. Also, as explained above, communication between mobile communication devices may be possible in order to collaboratively transmit local model parameters to a base station, if necessary.

In some embodiments, the method may further comprise locally scheduling, at the one or more base stations, communication with at least one of the subset of mobile communication devices. Thus, interferences during transmitting and receiving of model parameters can be avoided. In these embodiments, the local scheduling may be based on at least one of: a current distance between the respective base station and the respective mobile communication device, a speed of motion of the at least of the respective mobile communication device, a direction of motion of the respective mobile communication device. For example, if a certain mobile communication device is furthest away from the base station and is moving away at a high speed, the communication with such mobile communication device should be scheduled before communication with another mobile communication device which is closer to the base station. As another example, a communication with a mobile communication device may be scheduled such that it occurs after an ongoing transmission concerning the mobile communication device has completed.

It will be appreciated that although the steps in the method illustrated in Figure 1 have been described as being performed sequentially, in some embodiments at least some of the steps in the illustrated method may be performed in a different order, and/or at least some of the steps in the illustrated method may be performed simultaneously. Also, in some embodiments, there may be provided a system configured to perform the method as explained above with reference to Figure 1.

An objective of the method as described with reference to Figure 1 may be to include as many mobile communication devices as possible for performing federated learning model training to ensure convergence of the model training. Also, the method can be particularly useful in cases where the parameters of the federated model change quite often which means that retraining of the federated learning model is desired or necessary. For example, the federated learning model may be applied to an autonomous vehicle which relies very much on the current traffic conditions, actions and/or motions of other vehicles on the road, and current weather conditions, etc. In this case, vehicles that are in a coverage area of a base station in the shared route can participate in the training of the federated learning model using data gathered from sensors at respective vehicles and providing model parameters to the base station for aggregation.

In this regard, many modern vehicles are equipped with entertainment systems which are connected to the vehicle's global positioning system (GPS). The GPS connection together with the cellular connectivity of the vehicle can provide a great platform for applications that utilise vehicle navigation data to plan and perform model training and transmission of model parameters (e.g. layer coefficients). Using platform application programming interfaces (APIs), necessary connections can be established for the purpose of performing the methods as described herein.

One way to implement the methods described herein is to incorporate a processor in the mobile communication devices for performing model training or inference provided with USB ports for GPS access and copper network (e.g. CAT cables or similar) to communicate with other mobile communication devices (network switch to obtain access to cellular connectivity, etc.). The model parameters (e.g. layer coefficients) may be transmitted from the mobile communication devices "over the top" via the Transmission Control Protocol (TCP) to the base station for aggregation, so that the transmission would not be hindered if the mobile communication device is located somewhere with limited cellular connectivity but good Wi-Fi coverage, for example.

**Figure 2** is a block diagram of a system for scheduling federated learning tasks for training a federated learning model, according to embodiments of the disclosure. The system 200 comprises a processing circuit 210 and a memory 220.

The memory 220 is coupled to the processing circuit 210, and comprises computer readable program instructions that, when executed by the processing circuit 210, cause the system 200 to acquire data associated with the routes of a plurality of mobile communication devices. One or more of the mobile communication devices may be vehicles, in particular vehicles connected to a network, for example. In some other examples, one or more of the mobile communication devices may be devices (e.g. a smartphone) belonging to a passenger on a vehicle (e.g. a bus). In some embodiments, the data associated with the routes of a plurality of mobile communication devices may be acquired from a storage and/or memory of respective mobile communication devices themselves or acquired from a remote entity (which in turn may be connected to the respective mobile communication devices).

The data associated with the routes of the plurality of mobile communication devices may include at least one of: current route data of the plurality of mobile communication devices, and inferred route data of the plurality of mobile communication devices. The current route data of the plurality of mobile communication devices may be acquired from a navigation application associated with respective mobile communication devices. Also, the inferred route data may be acquired from an external artificial intelligence component. In some embodiments, data associated with the routes of the plurality of mobile communication devices may comprise at least one of: a location of a mobile communication device, a speed of a mobile communication device, a direction of a mobile communication device, and one or more environmental features associated with a mobile communication device. The one or more environmental features may include one or more of: road conditions, traffic conditions, weather conditions.

The system 200 is further caused to determine a subset of mobile communication devices which share a same route for a given amount of time, based on the data associated with the routes of the plurality of mobile communication devices. The given amount of time in the context of the present disclosure may be determined based on at least one of: complexity of the federated learning model, the speed of the mobile communication devices, the direction of the mobile communication devices, the locations of the mobile communication devices relative to base stations in their respective routes, and processing resources available at the mobile communication devices.

The system 200 is further caused to determine one or more base stations located along the shared route, and estimate, for the one or more base stations, points of time at which the subset of mobile communication devices is in a coverage area of the respective base station. The base stations described herein with reference to Figure 2 are understood to assume master roles in the context of federated learning.

As mentioned above, in some embodiments, the data associated with the routes of the plurality of mobile communication devices may comprise at least one of: a location of a mobile communication device, a speed of a mobile communication device, a direction of a mobile communication device, and one or more environmental features associated with a mobile communication device. In these embodiments, the system 200 may be caused to estimate the points of time at which the subset of mobile communication devices are in the coverage areas of respective base stations by analysing, using a machine learning model, the data associated with the routes of the plurality of mobile communication devices.

The system 200 is further caused to determine at least one of: an amount of required processing resources at the one or more of the base stations and an amount of required processing resources at the subset of mobile communication devices. This determination is based on the estimated points of time at which the subset of mobile communication device is in a coverage area of respective base stations. The amount of required processing resources for a base station or for a mobile communication device may be associated with at least one of: an amount of required computation resources, an amount of required storage resources, and an amount of required networking resources. In some cases, the available processing power such as the available RAM-memory and/or other closely related capabilities at a base station and/or a mobile communication device can be taken into account in the generation of the schedule. For example, the scheduling may take into account if the federated learning model is too large to fit in the memory of the processing component of a mobile communication device. In some embodiments, the system 200 may be caused to determine the amount of required processing resources for a base station or for a mobile communication device further based on an estimated amount of processing resources required by the federated learning model.

In some embodiments, the system 200 may be further caused to acquire configuration management data associated with the shared route, for example from an operations support system (OSS). In these embodiments, the system 200 may be caused to determine the one or more base stations located along the shared route based on the configuration management data.

In some embodiments, the system 200 may be further caused to assign a worker role or a semi-master role to at least one of the subset of mobile communication devices. In these embodiments, a worker role indicates that model training is to be performed at the respective mobile communication device, and a semi-master role indicates that gathering of local model parameters from nearby mobile communication devices is to be performed at the respective mobile communication device. More specifically, in some embodiments a worker role may indicate that model layers (e.g. layers in a DNN or a CNN) are trained and evaluated at the respective mobile communication device. The assigned roles may be communicated to the respective mobile communication devices and/or base stations by a communication unit, for example. Also, the assignment of roles may be based on the time available, and/or data available, and/or processing resources available for the training of the federated learning model. The assignment of roles may be regarded as part of the generation of the schedule in some embodiments.

Moreover, the system 200 is caused to generate a schedule for a plurality of federated learning tasks to be performed at the subset of mobile communication devices and the one or more base stations. Examples of federated learning tasks include transmission/reception of model parameters between base stations and mobile communication devices and/or between mobile communication devices, as well as actual federated learning model training at the mobile communication devices using data available at respective mobile communication devices. The schedule may include information such as timing, ordering, and role assignments of the one or more base stations and/or mobile communication devices. In some cases, the schedule may be generated such that safety critical applications (e.g. systems predicting traffic problems or warning systems that communicates with the mobile communication devices) are prioritised over model training. Also, in some cases, the schedule may be generated such that federated training is performed at a certain desired number or proportion of vehicle types (e.g. car, trucks, buses, etc.), for example if the mobile communication device is vehicle or the mobile communication device is associated with a user travelling in a vehicle.

The generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices. In some embodiment, the priority levels associated with federated learning tasks may be acquired from the metadata of the federated learning model.

The schedule may be generated such that when a respective mobile communication device is estimated to be in a coverage area of a respective base station, communication between the mobile communication device and the base station is triggered to perform at least a part of a scheduled federated learning task. In some embodiments, the communication between the mobile communication device and the base station may comprise at least one of: transmitting initial model parameters for the federated learning model from the base station to the mobile communication device, and transmitting local model parameters for the federated learning model from the mobile communication device to the base station. The local model parameters may be generated by respective mobile communication devices using data acquired from sensor(s) at the mobile communication devices. In some embodiments, the model parameters may include layer coefficients in a Deep Neural Network (DNN) or a Convolutional Neural Network (CNN).

In some embodiments, the system 200 may be caused to generate the schedule further based on at least one of: a type of connectivity (e.g. cellular, v2v, Bluetooth, or Wi-Fi) between respective mobile communication devices and/or between respective base stations and respective mobile communication devices, a quality of connectivity (e.g. signal strength, received signal quality (RxQual), etc.) between respective mobile communication devices and/or between respective base stations and respective mobile communication devices, radio quality metrics of the one or more base stations and/or of one or more of the subset of mobile communication devices, a type of device required for performing a respective federated learning task, available processing power at a respective base station, and available processing power at a respective mobile communication devices.

A priority level associated with a federated learning task may be based on at least one of: a priority level of the federated learning model, a type of data required for the federated learning model, existing data already available for the federated learning model, a level of subscription associated with a mobile communication device at which the federated learning task is to be performed. Therefore, in some embodiments, the system 200 may be caused to determine the priority levels on such basis. The priority level of the federated learning model may be set by a controlling entity and is contained in the metadata of the federated learning model.

Although not shown in Figure 2, the system 200 may be further caused to communicate the generated schedule to at least one of the one or more base stations and the subset of mobile communication devices.

In some embodiments, the system 200 may encompass at least one of the base station(s) that are determined as being located along the shared routes of the subset of mobile communication devices. In these embodiments, at least one of the base station(s) may be configured to receive local model parameters from at least one of the subset of mobile communication devices, and to perform an aggregation algorithm based on the received local model parameters to generate an updated federated learning model. Furthermore, the base station(s) may be configured to transmit the updated federated learning model to at least one of the subset of mobile communication devices or at least one of the plurality of mobile communication devices.

Moreover, the base station(s) may be configured to locally schedule communication with at least one of the subset of mobile communication devices. Thus, interferences during transmitting and receiving of model parameters can be avoided. In these embodiments, the local scheduling may be based on at least one of: a current distance between the respective base station and the respective mobile communication device, a speed of motion of the at least of the respective mobile communication device, a direction of motion of the respective mobile communication device.

It will be appreciated that Figure 2 only shows the components required to illustrate an aspect of the system 200 and, in a practical implementation, the system 200 may comprise alternative or additional components to those shown.

Any appropriate steps, methods, or functions may be performed through a computer program product that may, for example, be executed by the components and equipment illustrated in the figure above. For example, there may be provided a storage or a memory at the system 200 that may comprise non-transitory computer readable means on which a computer program can be stored. The computer program may include instructions which cause the components of the system 200 or any operatively coupled entities and devices) to execute methods according to embodiments described herein. The computer program and/or computer program product may thus provide means for performing any steps herein disclosed.

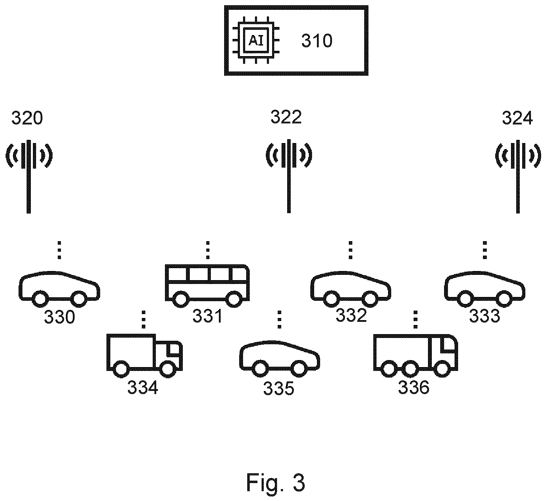

**Figure 3** is a schematic diagram of illustrating an exemplary implementation of the method for scheduling federated learning tasks for training a federated learning model, according to an embodiment.

As shown in the schematic diagram of Figure 3, there is provided a system 310, a first base station 320, a second base station 322, a third base station 324, a first vehicle 330, a second vehicle 331, a third vehicle 332, a fourth vehicle 333, a fifth vehicle 334, a sixth vehicle 335, and a seventh vehicle 336. The first to seventh vehicles are connected vehicles in a network.

The system 310 may be regarded as being equivalent to the system 200 as described above with reference to Figure 2. In this embodiment, the system 310 is configured to acquire data associated with the routes of the vehicles 330 to 336 from the vehicles 330 to 336 and then determine which of the vehicles 330 to 336 share the same route. For example, the second vehicle 331, the third vehicle 332, the fifth vehicle 334, and the sixth vehicle 335 may share the same route and therefore in such instance they may be determined as the subset of vehicles for the purpose of the rest of the operations of the system 310. In cases where all the first to seventh vehicles 330 to 336 share the same route in a given amount of time, they would all belong in the determined "subset".

Once the subset of vehicles that share the same route has been determined, the system 310 can then determine the base stations that are located along the shared route. For example, in some cases all of the first to third base stations 320 to 324 may be identified as being located along the shared route, and in some cases only a subset of the base stations illustrated in the drawing may be identified as being located along the shared route.

The system 310 can then estimate, for the one or more base stations 320 to 324 that are located along the shared route, points of time at which each of the subset of vehicles is in a coverage area of the respective base station. Subsequently, the system 310 can determine at least one of an amount of required processing resources at the base stations (that are determined as being located along the shared route), and an amount of required processing resources at the subset of vehicles. As explained above with reference to Figures 1 and 2, the determination is based on the estimated points of time at which the subset of vehicles are in coverage areas of respective base stations.

The system 310 can then generate a schedule for a plurality of federated learning tasks to be performed at the subset of vehicles and the one or more base station. The generation of the schedule is based on priority levels associated with the plurality of federated learning tasks, estimated points of time at which the subset of vehicles are in coverage areas of the one or more base stations, and at least one of: the amount of required processing resources at the one or more base stations and the amount of required processing resources at the subset of vehicles.

According to the generated schedule the system 310, the determined subset of vehicles can each transmit local model parameters to a base station after performing local federated learning, according to the generated schedule. Also, a relevant base station, after performing federated averaging of the received local model parameters, can transmit model parameters associated with an updated federated learning model to vehicles that are in its coverage area. Also, the schedule can be generated such that, if certain vehicles are no longer in the coverage area of a base station along the shared route, transmission can be arranged between base stations such that another base station along the shared route can transmit the model parameters associated with an updated federated learning model to the vehicles when they enter the respective coverage area.

Since the system 310 is configured to generate the schedule based on a number of factors, including priority level associated with FL tasks to be performed (which in turn may be determined based on type/amount of data required by the FL model), the estimated points of time at which the subset of vehicles are in coverage areas of the one or more base stations (which in turn are determined based on inferred or known routes of the vehicles), and other metrics such as those related to connectivity, the generated schedule can be optimised to ensure that the common FL goal is to converge to produce accurate results. Moreover, since in some cases vehicles (or more generally, mobile communication devices) can communicate with each other, the need to communicate with a single centralised server can be avoided and thus delays in the FL model training can be reduced. With the reduced delays, FL training can be performed in a more efficient manner which leads to better performance of the trained model.

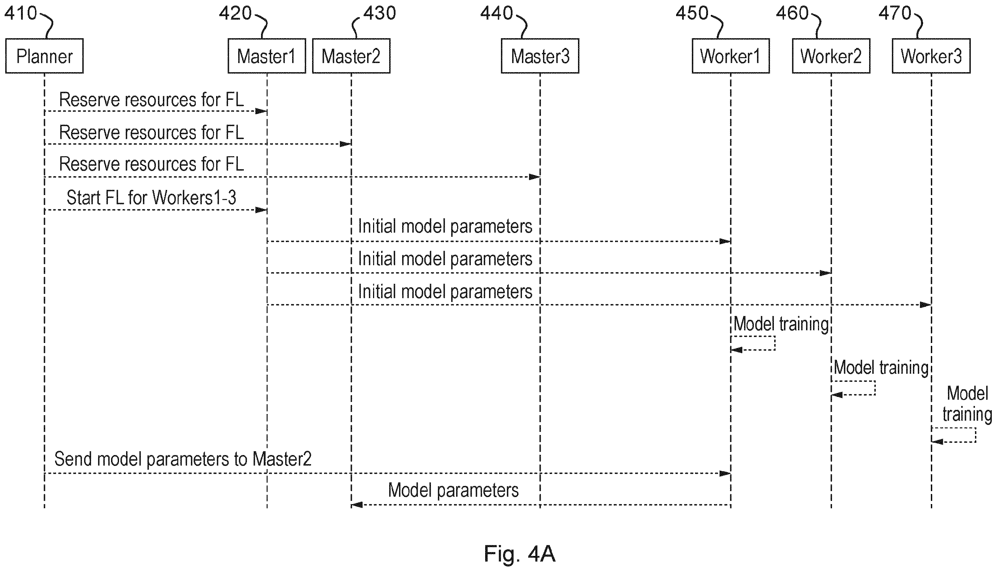

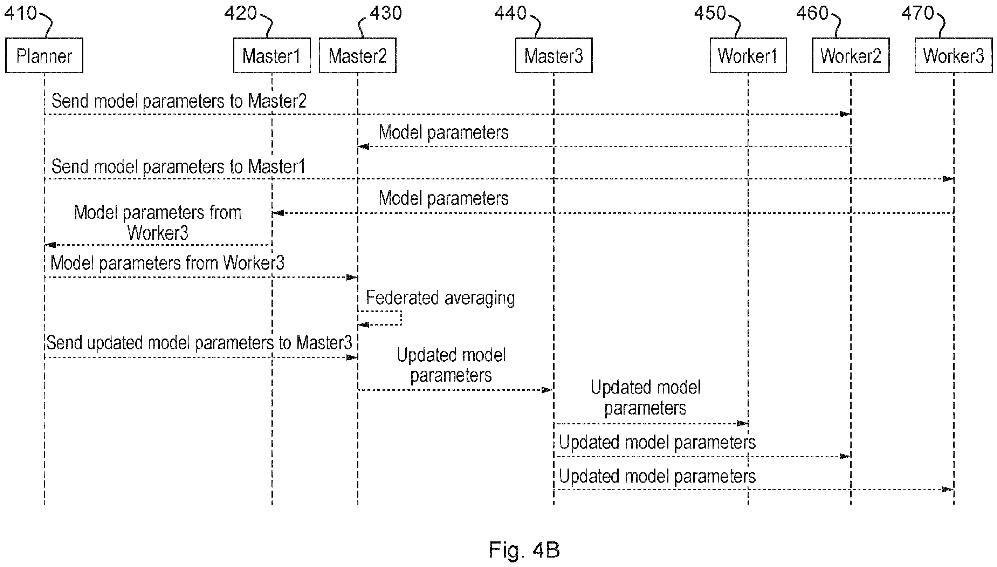

**Figure 4A** **and** **Figure 4B** are sequence diagrams illustrating an exemplary implementation of the method for scheduling federated learning tasks for training a federated learning model, according to an embodiment.

As shown in the sequence diagram of Figure 4, there is provided a planner 410, a first master 420, a second master 430, a third master 440, a first worker 450, a second worker 460, and a third worker 470. It will be appreciated that the planner 410 in this embodiment can be regarded to be equivalent to the system 200 as described with reference to Figure 2 above. It will also be appreciated that, in the present embodiment the first to third masters 420 to 440 are roles that each can be assumed by one of the plurality of base stations as described above with reference to Figures 1 to 3. Similarly, the first to third workers are roles that each can be assumed by one of the subset of mobile communication devices (or more specifically in some examples, vehicles) as described with reference to Figures 1 to 3.

In this exemplary embodiment, the method starts with the planner 410 sending instructions to each of the first master 420, the second master 430, and the third master 440 to indicate to each of the masters to reserve processing resources for performing federated learning. The instruction may include a message which, for example, indicates at least one of: an amount of computational resources required (to perform the necessary calculations), information associated with the federated learning model (to identify the federated learning model), an amount of storage resources required, and time and/or duration for performing the federated learning operations.

Then, the planner 410 sends an instruction to the first master 420 to initiate federated learning at each of the first worker 450, the second worker 460, and the third worker 470. Upon receiving this instruction, the first master 420 can send to each of the first worker 450, the second worker 460, and the third worker 470 initial model parameters of the federated learning model. The initial model parameters may be random parameters (e.g. neural network weights).

After receiving model parameters from the first master 420, each of the first worker 450, the second worker 460, and the third worker 470 performs federated learning to produce local model parameters for the federated learning model.

In the present example, as part of the schedule that is generated in the manner as described with reference to Figures 1 and 2, it may be determined by the planner 410 that local model parameters generated at the first worker 450 and the second worker 460 are to be transmitted to the second master 430, and that the local model parameters generated at the third worker 470 are to be transmitted to the first master 420. This may be because the first worker 450 and the second worker 460 are estimated by the planner 410 to be in the coverage area of the second master 430 on their known or inferred routes, by the time local training is complete at these workers. Similarly, the third worker 470 may be estimated to be in the coverage area of the first master 420 in its known or inferred route by the time local training is complete at the third worker 470.

Therefore, in this example, the planner 410 can first send an instruction to the first worker 450 to indicate that the local model parameters are to be transmitted to the second master 430, and upon receiving such instruction, the first worker 450 transmits the local model parameters to the second master 430. The same operation is performed with respect to the second worker 450, as shown in the sequence diagram of Figure 4A. The planner 410 can also send an instruction to the third worker 470 to indicate that the local model parameters are to be transmitted to the first master 420, and upon receiving such instruction, the third worker 470 transmits the local model parameters to the first master 420.

As explained above, in the present example the local model parameters from the first and second workers 450 and 460 are transmitted to the second master 430 while the local model parameters from the third worker 470 are transmitted to the first master 420. Therefore, in order to consolidate all local model parameters at a single entity for the purpose of aggregation to produce a global updated federated learning model, the local model parameters associated with the third worker 470 should be further communicated to the second master 430. In this example, this can be achieved by way of arranging transmission of the relevant local model parameters from the first master 420 to the second master 430. As shown in the sequence diagram in Figure 4B, as part of the generated schedule, the planner 410 can send an instruction to the first master 420 to indicate that the local model parameters associated with the third worker 470 should be transmitted to the second master 430. Upon receiving this instruction, the first master 420 transmits the local model parameters associated with the third worker 470 to the second master 430.

Once the second master 430 has received the local model parameters associated with the third worker 470, it can then perform federated averaging of all the local model parameters associated with the first to third workers 450 to 470, using an aggregation algorithm, to produce an updated federated learning model. The federated averaging operation may also be regarded as part of the schedule generated by the planner 410.

Then, also as a part of the generated schedule, the planner 410 can instruct the second master 430 to transmit model parameters associated with the updated federated learning model. More specifically, in this case as part of the generated schedule it may be estimated by the planner 410 that by the time the second master 430 has completed the federated averaging operation, the first to third workers 450 to 470 would be in the coverage area of the third master 440. Hence, the planner 410 can send an instruction to the second master 430 to indicate that the model parameters associated with the updated federated learning model are to be transmitted to the third master 440. Upon receiving such instruction, the second master 430 can transmit the model parameters associated with the updated federated learning model to the third master 440.

Once the third master 440 has received the model parameters associated with the updated federated learning model, it can then further transmit these model parameters to each of the first worker 450, second worker 460, and the third worker 470. Thus, each of these workers can benefit from the updated federated learning model for an associated purpose (e.g. autonomous driving).

The above described process can be repeated, involving more master nodes for upcoming model training rounds, until the federated learning model has converged or until workers are available.

Embodiments of the disclosure thus propose methods and systems for scheduling of federated learning tasks which allow optimised orchestration of the communication that is required to fulfil the requirements of the federated learning model.

The above disclosure sets forth specific details, such as particular embodiments or examples for purposes of explanation and not limitation. It will be appreciated by one skilled in the art that other examples may be employed apart from these specific details.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings.

## Claims

1. A computer-implemented method for scheduling federated learning tasks for training a federated learning model, the method comprising:
acquiring (110) data associated with the routes of a plurality of mobile communication devices;
determining (120) a subset of mobile communication devices which share a same route for a given amount of time based on the data associated with the routes of the plurality of mobile communication devices;
determining (130) one or more base stations located along the shared route;
estimating (140), for the one or more base stations, points of time at which the subset of mobile communication devices are in coverage areas of respective base stations;
determining (150) at least one of: an amount of required processing resources at the base stations and an amount of required processing resources at the subset of mobile communication devices, wherein the determination is based on the estimated points of time at which the subset of mobile communication devices are in coverage areas of respective base stations; and
generating (160) a schedule for a plurality of federated learning tasks to be performed at the subset of mobile communication devices and the one or more base stations, wherein the generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices.

2. The method according to claim 1, further comprising communicating the generated schedule to at least one of: the one or more base stations and the subset of mobile communication devices.

3. The method according to claim 1 or claim 2, further comprising assigning a worker role or a semi-master role to at least one of the subset of mobile communication devices, wherein a worker role indicates that model training is to be performed at the respective mobile communication device, and a semi-master role indicates that gathering of local model parameters from nearby mobile communication devices is to be performed at the respective mobile communication device.

4. The method according to any one of the preceding claims, wherein the schedule is generated such that when a respective mobile communication device is estimated to be in a coverage area of a respective base station, communication between the mobile communication device and the base station is triggered to perform at least a part of a scheduled federated learning task.

5. The method according to claim 4, wherein communication between the mobile communication device and the base station comprises at least one of: transmitting initial model parameters for the federated learning model from the base station to the mobile communication device, and transmitting local model parameters for the federated learning model from the mobile communication device to the base station.

6. The method according to claim 5, further comprising:
receiving, at a base station, local model parameters from at least one of the subset of mobile communication devices; and
performing, at the base station, an aggregation algorithm based on the received local model parameters to generate an updated federated learning model,
the method further comprising transmitting the updated federated learning model to at least one of the subset of mobile communication devices or at least one of the plurality of mobile communication devices.

7. The method according to any one of the preceding claims, wherein the data associated with the routes of the plurality of mobile communication devices includes at least one of: current route data of the plurality of mobile communication devices, and inferred route data of the plurality of mobile communication devices.

8. The method according to claim 7, wherein the current route data of the plurality of mobile communication devices is acquired from a navigation application associated with respective mobile communication devices, and/or wherein the inferred route data is acquired from an external artificial intelligence component.

9. The method according to any one of the preceding claims, further comprising locally scheduling, at the one or more base stations, communication with at least one of the subset of mobile communication devices,
wherein the local scheduling is based on at least one of: a current distance between the respective base station and the respective mobile communication device, a speed of motion of the at least of the respective mobile communication device, a direction of motion of the respective mobile communication device.

10. The method according to any one of the preceding claims, further comprising acquiring configuration management data associated with the shared route, and wherein determining one or more base stations located along the shared route is based on the configuration management data.

11. The method according to claim 10, wherein the configuration management data is acquired from an operations support system.

12. The method according to any one of the preceding claims,
wherein data associated with the routes of the plurality of mobile communication devices comprises at least one of: a location of a mobile communication device, a speed of a mobile communication device, a direction of a mobile communication device, and one or more environmental features associated with a mobile communication device, wherein the one or more environmental features includes one or more of: road conditions, traffic conditions, weather conditions,
wherein the estimation of points of time at which the subset of mobile communication devices are in the coverage areas of the respective base stations comprises analysing, using a machine learning model, the data associated with the routes of the plurality of mobile communication devices.

13. The method according to any one of the preceding claims, wherein determining (150) an amount of required processing resources for a base station or for a mobile communication device is further based on an estimated amount of processing resources required by the federated learning model.

14. The method according to any one of the preceding claims, wherein the amount of required processing resources for a base station or for a mobile communication device is associated with at least one of: an amount of required computational resources, an amount of required storage resources, and an amount of required networking resources.

15. The method according to any one of the preceding claims, wherein the generation (160) of the schedule is further based on at least one of: a type of connectivity between respective mobile communication devices and/or between respective base stations and respective mobile communication devices, a quality of connectivity between respective mobile communication devices and/or between respective base stations and respective mobile communication devices, radio quality metrics of the one or more base stations and/or of one or more of the subset of mobile communication devices, a type of device required for performing a respective federated learning task, available processing power at a respective base station, and available processing power at a respective mobile communication devices.

16. The method according to any one of the preceding claims, wherein a priority level associated with a federated learning task is based on a level of subscription associated with a mobile communication device at which the federated learning task is to be performed, wherein the priority level of the federated learning model is set by a controlling entity and is contained in the metadata of the federated learning model.

17. A system for scheduling federated learning tasks for training a federated learning model, the system being configured to:
acquire data associated with the routes of a plurality of mobile communication devices;
determine a subset of mobile communication devices which share a same route for a given amount of time based on the data associated with the routes of the plurality of mobile communication devices;
determine one or more base stations located along the shared route;
estimate, for the one or more base stations, points of time at which the subset of mobile communication devices are in coverage areas of respective base stations;
determine at least one of: an amount of required processing resources at the base stations and an amount of required processing resources at the subset of mobile communication devices, wherein the determination is based on the estimated points of time at which the subset of mobile communication devices are in coverage areas of respective base stations; and
generate a schedule for a plurality of federated learning tasks to be performed at the subset of mobile communication devices and the one or more base stations, wherein the generation of the schedule is based on priority levels associated with the plurality of federated learning tasks, estimated points of time at which the subset of mobile communication devices are in coverage areas of the one or more base stations, and at least one of: the amount of required processing resources at the one or more base stations and the amount of required processing resources at the subset of mobile communication devices.

## Patentansprüche

1. Computerimplementiertes Verfahren zum Planen von föderierten Lernaufgaben zum Trainieren eines föderierten Lernmodells, wobei das Verfahren Folgendes umfasst:
Erhalten (110) von Daten, die mit Routen einer Vielzahl von mobilen Kommunikationsvorrichtungen assoziiert sind;
Bestimmen (120) eines Teilsatzes von mobilen Kommunikationsvorrichtungen, welcher für einen gegebenen Zeitraum dieselbe Route gemeinsam hat, basierend auf den Daten, die mit den Routen der Vielzahl von mobilen Kommunikationsvorrichtungen assoziiert sind;
Bestimmen (130) von einer oder mehreren Basisstationen, die sich entlang der gemeinsamen Route befinden;
Schätzen (140), für die eine oder die mehreren Basisstationen, von Zeitpunkten, zu welchen sich der Teilsatz von mobilen Kommunikationsvorrichtungen in Abdeckungsgebieten jeweiliger Basisstationen befindet;
Bestimmen (150) mindestens eines des Folgenden: einer Menge an benötigten Verarbeitungsressourcen an den Basisstationen und einer Menge an benötigten Verarbeitungsressourcen an dem Teilsatz von mobilen Kommunikationsvorrichtungen, wobei die Bestimmung auf den geschätzten Zeitpunkten basiert, zu welchen sich der Teilsatz von mobilen Kommunikationsvorrichtungen in Abdeckungsgebieten jeweiliger Basisstationen befindet; und
Generieren (160) eines Zeitplans für eine Vielzahl von föderierten Lernaufgaben, die an dem Teilsatz von mobilen Kommunikationsvorrichtungen und der einen oder den mehreren Basisstationen durchzuführen ist, wobei die Generierung des Zeitplans auf Prioritätsstufen, die mit der Vielzahl von föderierten Lernaufgaben assoziiert sind, geschätzten Zeitpunkten, zu welchen sich der Teilsatz von mobilen Kommunikationsvorrichtungen in Abdeckungsgebieten der einen oder der mehreren Basisstationen befindet, und mindestens einem des Folgenden basiert: der Menge an benötigten Verarbeitungsressourcen an der einen oder den mehreren Basisstationen und der Menge an benötigten Verarbeitungsressourcen an dem Teilsatz von mobilen Kommunikationsvorrichtungen.

2. Verfahren nach Anspruch 1, ferner umfassend Kommunizieren des generierten Zeitplans an mindestens eines des Folgenden: die eine oder die mehreren Basisstationen und den Teilsatz von mobilen Kommunikationsvorrichtungen.

3. Verfahren nach Anspruch 1 oder Anspruch 2, ferner umfassend Zuweisen einer Bearbeiterrolle oder einer Semimasterrolle an mindestens eine des Teilsatzes von mobilen Kommunikationsvorrichtungen, wobei eine Bearbeiterrolle angibt, dass das Modelltraining an der jeweiligen mobilen Kommunikationsvorrichtung durchzuführen ist, und eine Semimasterrolle angibt, dass Sammeln von lokalen Modellparametern von nahegelegenen mobilen Kommunikationsvorrichtungen an der jeweiligen mobilen Kommunikationsvorrichtung durchzuführen ist.

4. Verfahren nach einem der vorhergehenden Ansprüche, wobei der Zeitplan derart generiert wird, dass, wenn geschätzt wird, dass sich eine jeweilige mobile Kommunikationsvorrichtung in einem Abdeckungsgebiet einer jeweiligen Basisstation befindet, Kommunikation zwischen der mobilen Kommunikationsvorrichtung und der Basisstation ausgelöst wird, um mindestens einen Teil einer geplanten föderierten Lernaufgabe durchzuführen.

5. Verfahren nach Anspruch 4, wobei die Kommunikation zwischen der mobilen Kommunikationsvorrichtung und der Basisstation mindestens eines des Folgenden umfasst: Übertragen von anfänglichen Modellparametern für das föderierte Lernmodell von der Basisstation an die mobile Kommunikationsvorrichtung und Übertragen von lokalen Modellparametern für das föderierte Lernmodell von der mobilen Kommunikationsvorrichtung an die Basisstation.

6. Verfahren nach Anspruch 5, ferner umfassend:
Empfangen, an einer Basisstation, von lokalen Modellparametern von mindestens einer des Teilsatzes von mobilen Kommunikationsvorrichtungen; und
Durchführen, an der Basisstation, eines Aggregationsalgorithmus basierend auf den empfangenen lokalen Modellparametern, um ein aktualisiertes föderiertes Lernmodell zu generieren,
wobei das Verfahren ferner Übertragen des aktualisierten föderierten Lernmodells an mindestens eine des Teilsatzes von mobilen Kommunikationsvorrichtungen oder mindestens eine der Vielzahl von mobilen Kommunikationsvorrichtungen umfasst.

7. Verfahren nach einem der vorhergehenden Ansprüche, wobei die Daten, die mit den Routen der Vielzahl von mobilen Kommunikationsvorrichtungen assoziiert sind, mindestens eines des Folgenden beinhalten: aktuelle Routendaten der Vielzahl von mobilen Kommunikationsvorrichtungen und abgeleitete Routendaten der Vielzahl von mobilen Kommunikationsvorrichtungen.

8. Verfahren nach Anspruch 7, wobei die aktuellen Routendaten der Vielzahl von mobilen Kommunikationsvorrichtungen von einer Navigationsanwendung erhalten werden, die mit jeweiligen mobilen Kommunikationsvorrichtungen assoziiert ist, und/oder wobei die abgeleiteten Routendaten von einer externen Komponente für künstliche Intelligenz erhalten werden.

9. Verfahren nach einem der vorhergehenden Ansprüche, ferner umfassend lokales Planen, an der einen oder den mehreren Basisstationen, von Kommunikation mit mindestens einer des Teilsatzes von mobilen Kommunikationsvorrichtungen,
wobei das lokale Planen auf mindestens einem des Folgenden basiert: einer aktuellen Entfernung zwischen der jeweiligen Basisstation und der jeweiligen mobilen Kommunikationsvorrichtung, einer Bewegungsgeschwindigkeit der jeweiligen mobilen Kommunikationsvorrichtung, einer Bewegungsrichtung der jeweiligen mobilen Kommunikationsvorrichtung.

10. Verfahren nach einem der vorhergehenden Ansprüche, ferner umfassend Erhalten von Konfigurationsverwaltungsdaten, die mit der gemeinsamen Route assoziiert sind, und wobei das Bestimmen von einer oder mehreren Basisstationen, die sich entlang der gemeinsamen Route befinden, auf den Konfigurationsverwaltungsdaten basiert.

11. Verfahren nach Anspruch 10, wobei die Konfigurationsverwaltungsdaten von einem Betriebsunterstützungssystem erhalten werden.

12. Verfahren nach einem der vorhergehenden Ansprüche,
wobei die Daten, die mit den Routen der Vielzahl von mobilen Kommunikationsvorrichtungen assoziiert sind, mindestens eines des Folgenden umfassen: einen Standort einer mobilen Kommunikationsvorrichtung, eine Geschwindigkeit einer mobilen Kommunikationsvorrichtung, eine Richtung einer mobilen Kommunikationsvorrichtung und ein oder mehrere Umweltmerkmale, die mit einer mobilen Kommunikationsvorrichtung assoziiert sind, wobei das eine oder die mehreren Umweltmerkmale eines oder mehrere des Folgenden beinhalten: Straßenbedingungen, Verkehrsbedingungen, Wetterbedingungen,
wobei die Schätzung der Zeitpunkte, zu welchen sich der Teilsatz von mobilen Kommunikationsvorrichtungen in den Abdeckungsgebieten der jeweiligen Basisstationen befindet, Analysieren, unter Verwendung eines Maschinenlernmodells, der Daten, die mit den Routen der Vielzahl von mobilen Kommunikationsvorrichtungen assoziiert sind, umfasst.

13. Verfahren nach einem der vorhergehenden Ansprüche, wobei das Bestimmen (150) einer Menge an benötigten Verarbeitungsressourcen für eine Basisstation oder für eine mobile Kommunikationsvorrichtung ferner auf einer geschätzten Menge an Verarbeitungsressourcen, die durch das föderierte Lernmodell benötigt wird, basiert.

14. Verfahren nach einem der vorhergehenden Ansprüche, wobei die Menge an benötigten Verarbeitungsressourcen für eine Basisstation oder für eine mobile Kommunikationsvorrichtung mit mindestens einem des Folgenden assoziiert ist: einer Menge an benötigten Rechenressourcen, einer Menge an benötigten Speicherressourcen und einer Menge an benötigten Vernetzungsressourcen.

15. Verfahren nach einem der vorhergehenden Ansprüche, wobei die Generierung (160) des Zeitplans ferner auf mindestens einem des Folgenden basiert: einem Konnektivitätstyp zwischen jeweiligen mobilen Kommunikationsvorrichtungen und/oder zwischen jeweiligen Basisstationen und jeweiligen mobilen Kommunikationsvorrichtungen, einer Konnektivitätsqualität zwischen jeweiligen mobilen Kommunikationsvorrichtungen und/oder zwischen jeweiligen Basisstationen und jeweiligen mobilen Kommunikationsvorrichtungen, einer Funkqualitätsmetrik der einen oder der mehreren Basisstationen und/oder von einer oder mehreren des Teilsatzes von mobilen Kommunikationsvorrichtungen, einem Vorrichtungstyp, der zum Durchführen einer jeweiligen föderierten Lernaufgabe benötigt wird, verfügbarer Verarbeitungsleistung an einer jeweiligen Basisstation und verfügbarer Verarbeitungsleistung an einer jeweiligen mobilen Kommunikationsvorrichtung.

16. Verfahren nach einem der vorhergehenden Ansprüche, wobei eine Prioritätsstufe, die mit einer föderierten Lernaufgabe assoziiert ist, auf einer Abonnementstufe basiert, die mit einer mobilen Kommunikationsvorrichtung assoziiert ist, an der die föderierte Lernaufgabe durchzuführen ist, wobei die Prioritätsstufe des föderierten Lernmodells durch eine Steuerinstanz eingestellt wird und in den Metadaten des föderierten Lernmodells enthalten ist.

17. System zum Planen von föderierten Lernaufgaben zum Trainieren eines föderierten Lernmodells, wobei das System zu Folgendem konfiguriert ist:
Erhalten von Daten, die mit Routen einer Vielzahl von mobilen Kommunikationsvorrichtungen assoziiert sind;
Bestimmen eines Teilsatzes von mobilen Kommunikationsvorrichtungen, welcher für einen gegebenen Zeitraum dieselbe Route gemeinsam hat, basierend auf den Daten, die mit den Routen der Vielzahl von mobilen Kommunikationsvorrichtungen assoziiert sind;
Bestimmen von einer oder mehreren Basisstationen, die sich entlang der gemeinsamen Route befinden;
Schätzen, für die eine oder die mehreren Basisstationen, von Zeitpunkten, zu welchen sich der Teilsatz von mobilen Kommunikationsvorrichtungen in Abdeckungsgebieten jeweiliger Basisstationen befindet;
Bestimmen mindestens eines des Folgenden: einer Menge an benötigten Verarbeitungsressourcen an den Basisstationen und einer Menge an benötigten Verarbeitungsressourcen an dem Teilsatz von mobilen Kommunikationsvorrichtungen, wobei die Bestimmung auf den geschätzten Zeitpunkten basiert, zu welchen sich der Teilsatz von mobilen Kommunikationsvorrichtungen in Abdeckungsgebieten jeweiliger Basisstationen befindet; und
Generieren eines Zeitplans für eine Vielzahl von föderierten Lernaufgaben, die an dem Teilsatz von mobilen Kommunikationsvorrichtungen und der einen oder den mehreren Basisstationen durchzuführen ist, wobei die Generierung des Zeitplans auf Prioritätsstufen, die mit der Vielzahl von föderierten Lernaufgaben assoziiert sind, geschätzten Zeitpunkten, zu welchen sich der Teilsatz von mobilen Kommunikationsvorrichtungen in Abdeckungsgebieten der einen oder der mehreren Basisstationen befindet, und mindestens einem des Folgenden basiert: der Menge an benötigten Verarbeitungsressourcen an der einen oder den mehreren Basisstationen und der Menge an benötigten Verarbeitungsressourcen an dem Teilsatz von mobilen Kommunikationsvorrichtungen.

## Revendications

1. Procédé informatique pour ordonnancement de tâches d'apprentissage fédéré pour l'apprentissage d'un modèle d'apprentissage fédéré, le procédé comprenant :
l'acquisition (110) de données associées aux itinéraires d'une pluralité de dispositifs de communication mobiles ;
la détermination (120) d'un sous-ensemble de dispositifs de communication mobiles partageant un même itinéraire pendant une durée donnée sur la base des données associées aux itinéraires de la pluralité de dispositifs de communication mobiles ;
la détermination (130) d'une ou plusieurs stations de base situées le long de l'itinéraire partagé ;
l'estimation (140), pour les une ou plusieurs stations de base, des instants auxquels le sous-ensemble de dispositifs de communication mobiles se trouvent dans des zones de couverture de stations de base respectives ;
la détermination (150) d'au moins l'une parmi : une quantité de ressources de traitement requises aux stations de base et une quantité de ressources de traitement requises au sous-ensemble de dispositifs de communication mobiles, la détermination étant basée sur les instants estimés auxquels le sous-ensemble de dispositifs de communication mobiles se trouvent dans des zones de couverture de stations de base respectives ; et
la génération (160) d'un ordonnancement pour une pluralité de tâches d'apprentissage fédéré à exécuter sur le sous-ensemble de dispositifs de communication mobiles et les une ou plusieurs stations de base, la génération de l'ordonnancement étant basée sur les niveaux de priorité associés à la pluralité de tâches d'apprentissage fédéré, les instants estimés où le sous-ensemble de dispositifs de communication mobile se trouvent dans des zones de couverture des une ou plusieurs stations de base, et au moins l'une parmi : la quantité de ressources de traitement requises aux une ou plusieurs stations de base et la quantité de ressources de traitement requises au sous-ensemble de dispositifs de communication mobiles.

2. Procédé selon la revendication 1, comprenant en outre la communication de l'ordonnancement généré à au moins l'un parmi : les une ou plusieurs stations de base et le sous-ensemble de dispositifs de communication mobiles.

3. Procédé selon la revendication 1 ou 2, comprenant en outre l'attribution d'un rôle de travailleur ou d'un rôle de semi-maître à au moins un dispositif du sous-ensemble de dispositifs de communication mobiles, dans lequel un rôle de travailleur indique que l'apprentissage du modèle doit être effectué au dispositif de communication mobile respectif, et un rôle de semi-maître indique que la collecte de paramètres de modèle local à partir de dispositifs de communication mobiles proches doit être effectuée au dispositif de communication mobile respectif.

4. Procédé selon l'une quelconque des revendications précédentes, dans lequel l'ordonnancement est généré de telle sorte que, lorsqu'un dispositif de communication mobile respectif est estimé de se trouver dans une zone de couverture d'une station de base respective, la communication entre le dispositif de communication mobile et la station de base est déclenchée pour effectuer au moins une partie d'une tâche d'apprentissage fédéré ordonnancé.

5. Procédé selon la revendication 4, dans lequel la communication entre le dispositif de communication mobile et la station de base comprend au moins l'une parmi : la transmission de paramètres de modèle initial pour le modèle d'apprentissage fédéré à partir de la station de base au dispositif de communication mobile, et la transmission de paramètres de modèle initial pour le modèle d'apprentissage fédéré à partir du dispositif de communication mobile à la station de base.

6. Procédé selon la revendication 5, comprenant en outre :
la réception, au niveau d'une station de base, de paramètres de modèle local provenant d'au moins un dispositif de communication mobile du sous-ensemble de dispositifs de communication mobiles ; et
la réalisation, au niveau de la station de base, d'un algorithme d'agrégation basé sur les paramètres de modèle local reçus pour générer un modèle d'apprentissage fédéré mis à jour,
le procédé comprenant en outre la transmission du modèle d'apprentissage fédéré mis à jour à au moins un dispositif de communication mobile du sous-ensemble de dispositifs de communication mobiles ou à au moins un dispositif de communication mobile de la pluralité de dispositifs de communication mobiles.

7. Procédé selon l'une quelconque des revendications précédentes, dans lequel les données associées aux itinéraires de la pluralité de dispositifs de communication mobiles comprennent au moins l'une parmi : les données d'itinéraire actuel de la pluralité de dispositifs de communication mobiles et les données d'itinéraire inféré de la pluralité de dispositifs de communication mobiles.

8. Procédé selon la revendication 7, dans lequel les données d'itinéraire actuel de la pluralité de dispositifs de communication mobiles sont acquises à partir d'une application de navigation associée aux dispositifs de communication mobiles respectifs, et/ou dans lequel les données d'itinéraire inféré sont acquises à partir d'un composant d'intelligence artificielle externe.

9. Procédé selon l'une quelconque des revendications précédentes, comprenant en outre l'ordonnancement local, au niveau des une ou plusieurs stations de base, de la communication avec au moins un dispositif de communication mobile du sous-ensemble de dispositifs de communication mobiles,
dans lequel l'ordonnancement local est basé sur au moins l'une parmi : une distance actuelle entre la station de base respective et le dispositif de communication mobile respectif, une vitesse de déplacement du dispositif de communication mobile respectif, et la direction de déplacement du dispositif de communication mobile respectif.

10. Procédé selon l'une quelconque des revendications précédentes, comprenant en outre l'acquisition de données de gestion de configuration associées à l'itinéraire partagé, et dans lequel la détermination d'une ou plusieurs stations de base situées le long de l'itinéraire partagé est basée sur les données de gestion de configuration.

11. Procédé selon la revendication 10, dans lequel les données de gestion de configuration sont acquises à partir d'un système d'aide à l'exploitation.

12. Procédé selon l'une quelconque des revendications précédentes,
dans lequel les données associées aux itinéraires de la pluralité de dispositifs de communication mobiles comprennent au moins l'une parmi : une localisation d'un dispositif de communication mobile, une vitesse d'un dispositif de communication mobile, une direction d'un dispositif de communication mobile et une ou plusieurs caractéristiques environnementales associées à un dispositif de communication mobile, dans lequel les une ou plusieurs caractéristiques environnementales comprennent l'un ou plusieurs parmi : les conditions routières, les conditions de circulation et les conditions météorologiques,
dans lequel l'estimation des instants où le sous-ensemble de dispositifs de communication mobiles se trouvent dans les zones de couverture des stations de base respectives comprend l'analyse, à l'aide d'un modèle d'apprentissage automatique, des données associées aux itinéraires de la pluralité de dispositifs de communication mobiles.

13. Procédé selon l'une quelconque des revendications précédentes, dans lequel la détermination (150) d'une quantité de ressources de traitement requises pour une station de base ou pour un dispositif de communication mobile est en outre basée sur une quantité estimée de ressources de traitement requises par le modèle d'apprentissage fédéré.

14. Procédé selon l'une quelconque des revendications précédentes, dans lequel la quantité de ressources de traitement requises pour une station de base ou pour un dispositif de communication mobile est associée à au moins l'une parmi : une quantité de ressources de calcul requises, une quantité de ressources de stockage requises et une quantité de ressources de réseau requises.

15. Procédé selon l'une quelconque des revendications précédentes, dans lequel la génération (160) de l'ordonnancement est en outre basée sur au moins l'un parmi : un type de connectivité entre les dispositifs de communication mobiles respectifs et/ou entre les stations de base respectives et les dispositifs de communication mobiles respectifs, une qualité de connectivité entre les dispositifs de communication mobiles respectifs et/ou entre les stations de base respectives et les dispositifs de communication mobiles respectifs, des mesures de qualité radio des une ou plusieurs stations de base et/ou d'un ou plusieurs dispositifs de communication mobiles du sous-ensemble de dispositifs de communication mobiles, un type de dispositif requis pour effectuer une tâche d'apprentissage fédéré respective, la puissance de traitement disponible à une station de base respective, et la puissance de traitement disponible à un dispositif de communication mobile respectif.

16. Procédé selon l'une quelconque des revendications précédentes, dans lequel un niveau de priorité associé à une tâche d'apprentissage fédéré est basé sur un niveau d'abonnement associé à un dispositif de communication mobile sur lequel la tâche d'apprentissage fédéré doit être effectuée, dans lequel le niveau de priorité du modèle d'apprentissage fédéré est défini par une entité de contrôle et est contenu dans les métadonnées du modèle d'apprentissage fédéré.

17. Système d'ordonnancement de tâches d'apprentissage fédéré pour l'entraînement d'un modèle d'apprentissage fédéré, le système étant configuré pour :
acquérir des données relatives aux itinéraires d'une pluralité de dispositifs de communication mobiles ;
déterminer un sous-ensemble de dispositifs de communication mobiles partageant un même itinéraire pendant une durée donnée sur la base des données associées aux itinéraires de la pluralité de dispositifs de communication mobiles ;
déterminer une ou plusieurs stations de base situées le long de l'itinéraire partagé ;
estimer, pour les une ou plusieurs stations de base, les instants auxquels le sous-ensemble de dispositifs de communication mobiles se trouvent dans des zones de couverture de stations de base respectives ;
déterminer au moins l'une parmi : une quantité de ressources de traitement requises aux stations de base et une quantité de ressources de traitement requises au sous-ensemble de dispositifs de communication mobiles, la détermination étant basée sur les instants estimés auxquels le sous-ensemble de dispositifs de communication mobiles se trouvent dans des zones de couverture de stations de base respectives ; et
générer un ordonnancement pour une pluralité de tâches d'apprentissage fédéré à réaliser au niveau du sous-ensemble de dispositifs de communication mobiles et des une ou plusieurs stations de base, la génération de l'ordonnancement étant basée sur des niveaux de priorité associés à la pluralité de tâches d'apprentissage fédéré, des instants estimés auxquels le sous-ensemble de dispositifs de communication mobiles se trouvent dans des zones de couverture des une ou plusieurs stations de base, et au moins l'une parmi : la quantité de ressources de traitement requises au niveau des une ou plusieurs stations de base et la quantité de ressources de traitement requises au niveau du sous-ensemble de dispositifs de communication mobiles.
